# EUROPEAN PATENT APPLICATION

(11) **EP 3 553 593 A1**
(43) Date of publication of application: **16.10.2019**
(21) Application number: 18166287.5
(22) Date of filing: 09.04.2018
(51) Int. Cl.: G02C 5/14, G02C 11/00

(54) **SPECTACLE FRAME**

(71) Applicant: Boston Club Co., Ltd., Sabae-shi, Fukui-ken 916-0021 (JP)
(72) Inventor: KOMATSUBARA, Kazumi, Fukui, 916-0021 (JP)
(74) Representative: Hoffmann Eitle

(57) **Abstract**

A spectacle frame (10) includes a first member (13a) and a second member (12). The first member (13a) and the second member (12) are expandably and foldably connected. The first member (13a) includes a frame fitting part. The frame fitting part is fitted to a device fitting part of a device (90), so that the device (90) may be mounted on the spectacle frame (10).

## Description

### Technical Field

The present invention is related to a spectacle frame.

### Background Art

JP 2015-96929 A and JP 2014-81481 A disclose devices used with spectacles. The device may include various elements, such as a computer, a display, a projector, a sensor, a camera, a microphone, a battery or a light. The device may display or project various information complementing a real world, such as a root guide to a destination, a translation of foreign language, or profile of a human in front. A plurality of devices may be used with a pair of spectacles. The device may be integrally formed with a spectacle frame, or removably mounted on the spectacle frame.

### Summary of Invention

### Technical Problem

Generally, a fixing member, such as a screw, is used for stably fixing a removable device to a spectacle frame. However, it may be hard to remove the device stably fixed with the fixing member.

The present invention aims to stably fix a device to a spectacle frame, and to ease removing the device from the spectacle frame.

### Solution to Problem

A spectacle frame includes a first member and a second member. The first member and the second member may be expandably and foldably connected. The first member may include an end face. The end face may be exposed when the first member and the second member are folded. The end face may be covered with the second member when the first member and the second member are expanded. The first member may include a frame fitting part. The frame fitting part may be fitted to a device fitting part of a device through the end face. When the first member and the second member are folded, the exposed end face may allow to fit the frame fitting part to the device fitting part, and thereby to mount the device on the spectacle frame. When the first member and the second member are expanded, the covered end face may prevent releasing of the frame fitting part from the device fitting part, and thereby removal of the device from the spectacle frame.

One of the first member and the second member may be a front. The other of the first member and the second member may be a temple.

The first member and the second member may be parts of a temple.

One of the first member and the second member may be a distal end part of a temple. The distal end part may be folded upward.

The device fitting part may have two opposite device fitting end faces. The device fitting part may have a device fitting surface. The device fitting surface may be provided between the device fitting end faces. The device fitting part may have a device fitting groove. The device fitting groove may be provided in the device fitting surface. The device fitting groove may penetrate between the device fitting end faces. The device fitting groove may have varying widths depending on locations along a depth direction. A first of the widths at a first depth may be larger than a second of the widths at a second depth shallower than the first depth.

The first member further may have a body extending generally along a first direction. The frame fitting part may have an extending part. The extending part may extend from the body along the first direction. The extending part may have generally the same length as the device fitting part. The extending part may have a cross section to generally match the device fitting groove. The extending part may fit to the device fitting groove.

A device mountable spectacle frame system may include the spectacle frame, and the device fitting part fixed to the device.

### Advantageous Effects of Invention

When in use, the first member and the second member are expanded. Thereby, fitting and releasing of the frame fitting part and the device fitting part is blocked. This makes the device to be stably fixed to the spectacle frame. When the first member and the second member are folded, the fitting and the releasing are allowed. This makes it easy to remove the device from the spectacle frame.

Covering the end face with the second member in an expanded state enables to block the fitting and the releasing. Exposing the end face in an folded state enables to allow the fitting and the releasing. Using connection between the front and the temple eliminates requirement of additional parts. Dividing the temple enables to mount the device at the middle of the temple.

### Brief Description of Drawings

Figs. 1 and 2 show a plan view and a front view of a spectacle frame with a device according to an embodiment.
Figs. 3 and 4 show a plan view and an enlarged IV-IV section view of the device according to the embodiment.
Figs. 5 and 7 show partially sectional plan views of the spectacle frame according to the embodiment.
Fig. 6 shows an enlarged VI-VI section view of the spectacle frame according to the embodiment.
Figs. 8 and 9 show enlarged section views of a spectacle frame and a device according to another embodiment.
Figs. 10 and 11 show a plan view and a side view of a spectacle frame with a device according to another embodiment.
Figs. 12 to 14 show a plan view, a side view and an enlarged XIV-XIV section view of the device according to the embodiment.
Figs. 15 to 17 show a plan view, a side view and an enlarged XVII-XVII section view of the spectacle frame according to the embodiment.
Figs. 18 and 19 show a plan view and a side view of a spectacle frame with devices according to another embodiment.
Figs. 20 and 21 show side views of the devices according to the embodiment.
Fig. 22 shows a side view of the spectacle frame according to the embodiment.
Fig. 23 to 26 show perspective views of a spectacle frame according to another embodiment.

### Embodiments

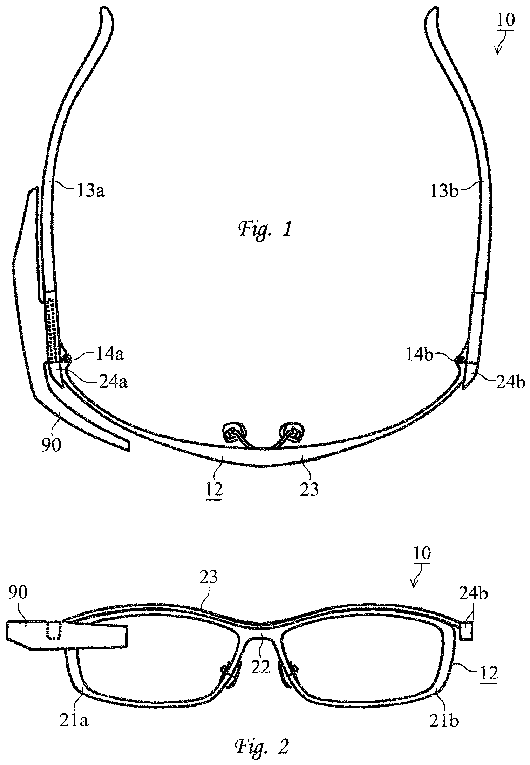

As shown in Figs. 1 and 2, a spectacle frame 10 according to an embodiment can be used with a device 90. The device 90 is mounted on the spectacle frame 10, so as to be stably fixed to the spectacle frame 10. The device 90 can be easily removed from the spectacle frame 10.

The spectacle frame 10 is made of synthetic resin, metal, or other materials, and includes a front 12, two temples 13a and 13b, and two joints 14a and 14b. The front 12 includes two rims 21a and 21b, a bridge 22, a top bar 23, and two end pieces 24a and 24b. The joint 14a connects the temple 13a to the front 12. The temple 13a can pivot on the joint 14a. The joint 14b connects the temple 13b to the front 12. The temple 13b can pivot on the joint 14b.

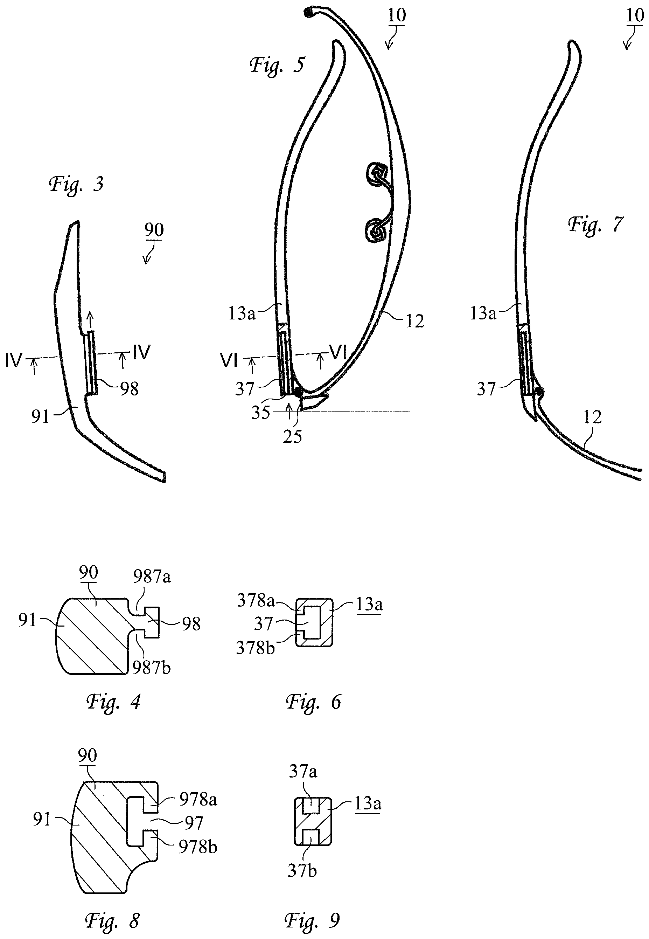

As shown in Figs. 3 and 4, the device 90 includes a body 91 and a guide projection, or device fitting part, 98. The guide projection 98 is elongate and protrudes inward from the body 91. The guide projection 98 has two grooves 987a and 987b, which makes its root narrower than its top.

As shown in Figs. 5 and 6, the front, or second member, 12 includes an end face 25, and the temple, or first member, 13a includes an end face 35 and a guide groove, or frame fitting part, 37. The guide groove 37 is elongate and recessed from an outer side face of the temple 13a. The guide groove 37 has two projections 378a and 378b, which makes its opening narrower than its bottom. The guide groove 37 is connected to the end face 35. That is, the guide groove 37 has another opening on the end face 35.

The guide groove 37 can be fitted to the guide projection 98, so that the device 90 can be stably fixed to the spectacle frame 10. The guide groove 37 is preferably to have a length substantially the same as that of the guide projection 98. The guide projection 98 can be inserted into the guide groove 37 through the opening on the end face 35, but cannot be inserted from other directions. Also, the guide projection 98 fitted to the guide groove 37 can be extracted from the guide groove 37 through the opening on the end face 35, but cannot be extracted toward other directions.

In a folded state shown in Fig. 5, the end faces 25 and 35 are apart. That is, the end face 35 is exposed. This allows insertion of the guide projection 98 into the guide groove 37, and extraction of the guide projection 98 from the guide groove 37. Thus, the device 90 can be easily removed from the spectacle frame 10.

In an expanded state shown in Fig. 7, the end faces 25 and 35 face one other. That is, the end face 35 is covered. This blocks insertion of the guide projection 98 into the guide groove 37, and extraction of the guide projection 98 from the guide groove 37. Thus, the device 90 can be stably fixed to the spectacle frame 10.

In this manner, the spectacle frame 10 allows easy mounting and removal of the device as required. A fixing member such as a screw is not needed. When the device is removed, it can be used as a usual spectacles.

As shown in Fig. 8, a device 90 according to another embodiment includes a guide groove, or device fitting part, 97. The guide groove 97 is recessed from an inner side face of a body 91. The guide groove 97 has two projections 978a and 978b, which makes its opening narrower than its bottom.

As shown in Fig. 9, a temple 13a includes two guide grooves, or frame fitting part, 37a and 37b. The guide groove 37a is recessed from a top face of the temple 13a. The guide groove 37b is recessed from a bottom face of the temple 13a. The guide groove 37a can be fitted to the projection 978a. The guide groove 37b can be fitted to the projection 978b.

This configuration also enables stable fixing of the device 90 to the temple 13a in the expanded state, and easy removal of the device 90 from the temple 13a in the folded state.

In this manner, the frame fitting part may have any shape enabling fitting to the device fitting part and stable fixing of the device. The frame fitting part is not limited to a groove. It may be a projection, or may have other shapes.

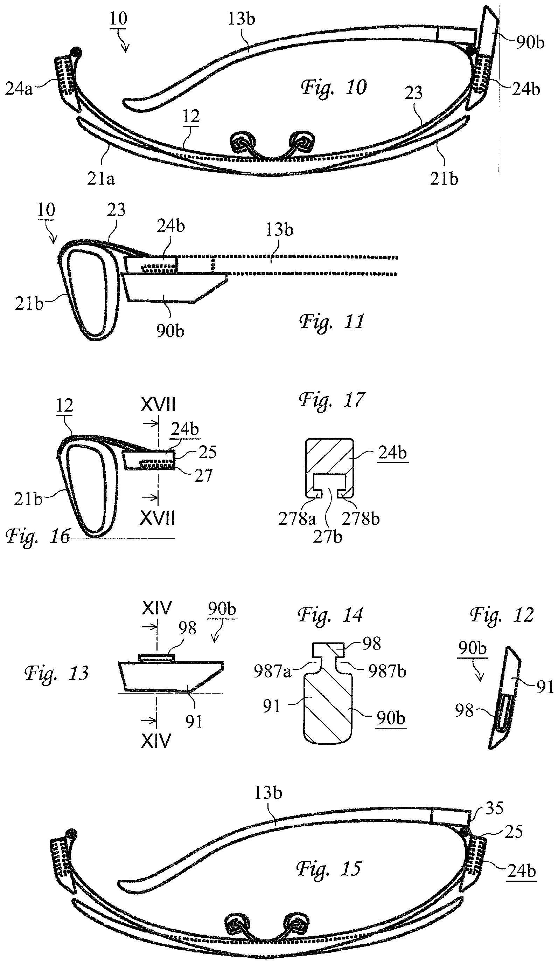

As shown in Figs. 10 and 11, a spectacle frame 10 according to another embodiment allows a device 90b to be mounted on a left side. The spectacle frame 10 also allows a device to be mounted on a right side.

The spectacle frame 10 includes a front 12 and two temples 13a and 13b. The temple 13a is omitted in the figure. The front 12 includes two rims 21a and 21b, a top bar 23, and two end pieces 24a and 24b.

As shown in Figs. 12 to 14, the device 90b includes a body 91 and a guide projection, or device fitting part, 98. The guide projection 98 is elongate and protrudes upward from the body 91. The guide projection 98 has two grooves 987a and 987b, which makes its root narrower than its top.

As shown in Figs. 15 to 17, the temple, ro second member, 13b includes an end face 35, and the end piece, or first member, 24b includes an end face 25 and a guide groove, or frame fitting part, 27. The guide groove 27 is elongate and recessed from an bottom face of the end piece 24b. The guide groove 27 has two projections 278a and 278b, which makes its opening narrower than its bottom. The guide groove 27 is connected to the end face 25. That is, the guide groove 27 has another opening on the end face 25.

The guide groove 27b can be fitted to the guide projection 98, so that the device 90 can be stably fixed to the spectacle frame 10. The guide projection 98 can be inserted into the guide groove 27b through the end face 25, but cannot be inserted from other directions. Also, the guide projection 98 fitted to the guide groove 27b can be extracted from the guide groove 27b through the end face 25, but cannot be extracted toward other directions.

In a folded state, the end faces 25 and 35 are apart. That is, the opening on the end face 25 is exposed. This allows insertion of the guide projection 98 into the guide groove 27b, and extraction of the guide projection 98 from the guide groove 27b. Thus, the device 90 can be easily removed from the spectacle frame 10.

In an expanded state, the end faces 25 and 35 face one other. That is, the opening on the end face 25 is closed. This blocks insertion of the guide projection 98 into the guide groove 27b, and extraction of the guide projection 98 from the guide groove 27b. Thus, the device 90 can be stably fixed to the spectacle frame 10.

In this manner, the frame fitting part may be provided on the front 12, and the temple may block the extraction.

The end piece 24a has a shape similar to the end piece 24b.

In this manner, the spectacle frame 10 may include two frame fitting parts.

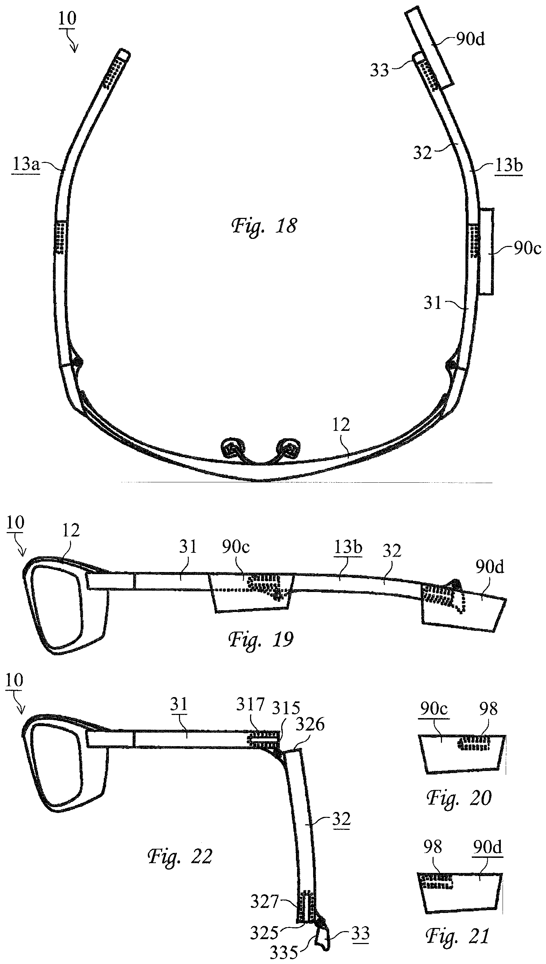

As shown in Figs. 18 and 19, a spectacle frame 10 according to another embodiment allows two devices 90c and 90d to be mounted on a left side. The spectacle frame 10 also allows two devices to be mounted on a right side.

The spectacle frame 10 includes a front 12 and two temples 13a and 13b. The temple 13b includes three parts 31 to 33. The first part 31 has a first end connected to the front 12. The second part 32 has a first end connected to a second end of the first part 31. The third part 33 is a distal end part of the temple 13b, and is connected to a second end of the second part 32.

As shown in Fig. 20, the device 90c includes a guide projection, or device fitting part, 98. As shown in Fig. 21, the device 90d also includes a guide projection, or device fitting part, 98.

As shown in Fig. 22, the first part, first member, 31 includes an end face 315 and a guide groove, or frame fitting part, 317. The guide groove 317 is connected to the end face 315. The guide groove 317 can be fitted to the guide projection 98 of the device 90c.

The second part, or second member as well as another first member, 32 can pivot downward against the first part 31. The second part 32 includes two end faces 325 and 326, and a guide groove, or another frame fitting part, 327. In folded state, the end face 326 leaves and exposes the end face 315, which allows the guide projection 98 to fit the guide groove 317. In expanded state, the end face326 abuts and covers the end face 315, which blocks the guide projection 98 to be extracted from the guide groove 317. the guide groove 327 can be fitted to the guide projection 98 of the device 90d.

The third part 33 (another second member) can pivot upward against the second part 32. The third part 33 includes an end face 335. In folded state, the end face 335 leaves and exposes the end face 325, which allows the guide projection 98 to fit the guide groove 327. In expanded state, the end face335 abuts and covers the end face 325, which blocks the guide projection 98 to be extracted from the guide groove 327.

When in use, the second part 32 is placed on wearer's ear. This achieves close contact between the end faces 315 and 326. And a weight of the third part 33 realizes close contact between the end faces 325 and 335. Thereby, the devices 90c and 90d can be stably fixed to the spectacle frame 10.

Even when the spectacle frame 10 is worn, the third part 33 can be folded, which enables mounting and removal of the device 90d.

In this manner, the temple may be divided, and the frame fitting part may be provided in the middle of the temple. One temple may include two or more frame fitting parts.

The temple 13a has a structure similar to the temple 13b.

In this manner, the spectacle frame 10 may includes three or more frame fitting parts.

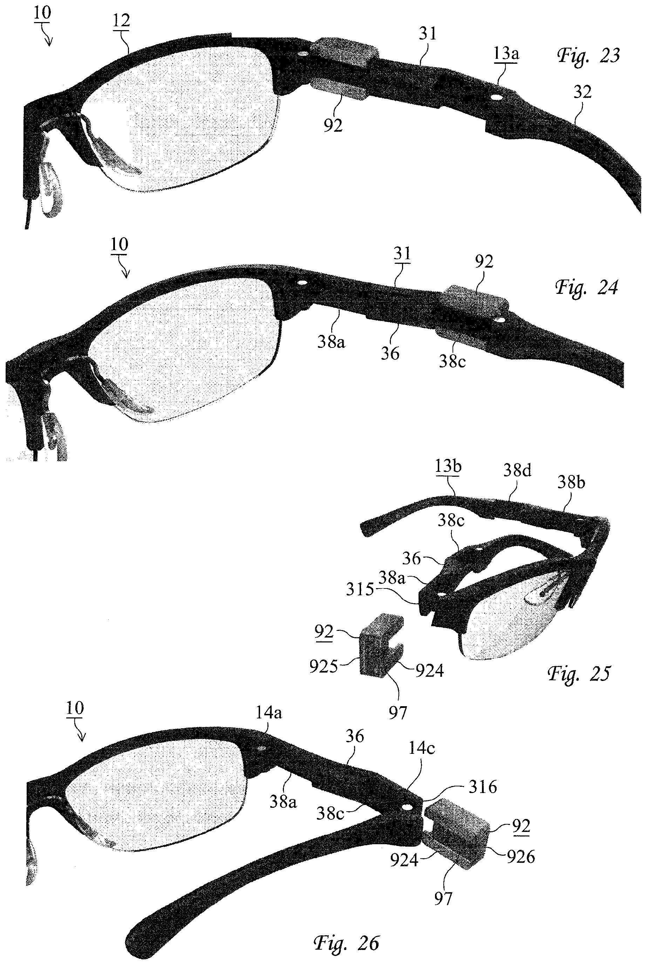

As shown in Figs. 23 to 26, a spectacle frame 10 according to another embodiment allows two devices to be mounted on a left side, and also allows two devices to be mounted on a right side.

A temple 13a includes two parts 31 and 32. The first part 31 has a body 36, and two extending parts 38a and 38c. The body 36 is elongate generally along a longitudinal direction of the first part 31. The first extending part 38a extends generally along the longitudinal direction of the first part 31 from a front side of the body 36. The first extending part 38a is connected to a front 12 via a joint 14a to allow outward expansion and inward folding in a generally horizontal plane. The second extending part 38c extends generally along the longitudinal direction of the first part 31 from a rear side of the body 36. The second extending part 38c is connected to the second part 32 via a joint 14c to allow outward expand and inward folding in a generally horizontal plane.

A temple 13b also includes two parts, and the first part has two extending parts 38b and 38d.

The device, not shown, has a device fitting part, or attachment, 92. The device fitting part 92 may be fixed to a body of the device through a screw or other fixing means, or may be formed integratedly with the body of the device. The device fitting part 92 can be fitted to the first extending part 38a, and also can be fitted to the second extending part 38c.

The device fitting part 92 has two end faces 925 and 926, a guide surface 924, and a guide groove 97. The end faces, or device fitting end faces, 925 and 926 are located opposite one another. The guide surface, or device fitting surface, 924 is provided between the end faces 925 and 926. The guide groove, or device fitting groove, 97 is provided in the guide surface 924, and penetrates between the end faces 925 and 926. The guide groove 97 has varying widths depending on locations along a depth direction. At a predetermined depth, the guide groove 97 has a predetermined width. At another predetermined depth, the guide groove 97 has another predetermined width. For at least one pair of the depths, the width at the deeper depth is larger than that at the shallower depth. For example, the widths are constant from the guide surface 924 to a predetermined depth. The widths are also constant from the predetermined depth to the bottom, but larger than that at the guide surface 924.

Each of the extending parts 38a and 38c also has varying widths depending on locations along a direction perpendicular to the longitudinal direction. The extending parts 38a and 38c have a cross section to generally match the guide groove 97.

This allows removal of the device fitting part 92 from the extending part along the logitudinal direction of the guide groove 97, but not along a depth direction of the guide groove 97.

Needless to say, the extending part may have an accompanying part corresponding to the outside of the guide groove 97. The joint 14a and/or 14c may be provided at a distal end of the accompanying part. This enables to prevent the joint 14a and 14c from blocking the fitting/releasing of the device fitting part 92. The accompanying part may extend along the extending part. Preferably, the accompany part is provided only at a distal end of the extending part. This enables the temple narrower.

The extending part has generally the same length as the device fitting part 92, or the guide groove 97. In the case that the device fitting part 92 is fitted to the extending part 38a, an end face of the front 12 abuts the end face 925 of the device fitting part 92, as well as the end face 315 of the first part 31, when the first part 31 and the front 12 are expanded. In the case that the device fitting part 92 is fitted to the extending part 38c, an end face of the second part 32 abuts the end face 926 of the device fitting part 92, as well as the end face 316 of the first part 31, when the first part 31 and the second part 32 are expanded. This prevents movement of the device fitting part 92 fitted to the extending part.

In this manner, one temple has a plurality of extending parts. This enables to mount a plurality of devices on the temple. Also, this enables to change a mounting position of the device depending on its size, shape, application, or other factors of the device.

When the device fitting part is separate from the device, a fixing means is required to fix the device fitting part to the device. The device fixing groove can easily provide a space for accommodating the fixing means, such as a screw.

The device may be an ornament without special functions, or may be used for hiding the frame fitting part. This impoves decorativeness of the spectacle frame.

The above described embodiments are examples to make it easier to understand the present invention. The present invention is not limited to the example, and includes any modified, altered, added, or removed variations, without departing from the scope of the claims attached herewith. This can be easily understood by persons skilled in the art.

For example, the spectacle frame may be a half rim type, or a rimless type.

### Reference Signs List

10: spectacle frame; 12: front; 13a and 13b: temple; 14a and 14b: joint; 21a and 21b: rim; 22: bridge; 23: top bar; 24a and 24b: end piece; 25, 35, 315, 325, 326, 335, 925 and 926: end face; 27, 37, 37a, 37b, 97, 317 and 327: guide groove; 278a, 278b, 378a, 378b, 978a and 978b: projection; 31: first part; 32: second part; 33: third part; 36 and 91: body; 38a to 38d: extending part; 90, 90b, 90c and 90d: device; 92: device fitting part; 924: guide surface; 98: guide projection; and 987a and 987b: groove.

## Claims

1. A spectacle frame (10), comprising a first member (13a; 13b; 12; 31; 32) and a second member (12; 13a; 13b; 32; 33), wherein
the first member (13a; 13b; 12; 31; 32) and the second member (12; 13a; 13b; 32; 33) are expandably and foldably connected,
the first member (13a; 13b; 12; 31; 32) comprises an end face (35; 25; 315; 325; 316) and a frame fitting part (37; 37a, 37b; 27; 317; 327; 38a; 38b; 38c; 38d),
the end face is exposed when the first member (13a; 13b; 12; 31; 32) and the second member (12; 13a; 13b; 32; 33) are folded, and covered with the second member when the first member (13a; 13b; 12; 31; 32) and the second member (12; 13a; 13b; 32; 33) are expanded,
the frame fitting part (37; 37a, 37b; 27; 317; 327; 38a; 38b; 38c; 38d) is fitted to a device fitting part (98; 97; 92) of a device (90) through the end face (35; 25; 315; 325; 316),
when the first member (13a; 13b; 12; 31; 32) and the second member (12; 13a; 13b; 32; 33) are folded, the exposed end face (35; 25; 315; 325; 316) allows to fit the frame fitting part (37; 37a, 37b; 27; 317; 327; 38a; 38b; 38c; 38d) to the device fitting part (98; 97; 92), and thereby to mount the device (90) on the spectacle frame (10), and
when the first member (13a; 13b; 12; 31; 32) and the second member (12; 13a; 13b; 32; 33) are expanded, the covered end face (35; 25; 315; 325; 316) prevents releasing of the frame fitting part (37; 37a, 37b; 27; 317; 327; 38a; 38b; 38c; 38d) from the device fitting part (98; 97; 92), and thereby removal of the device (90) from the spectacle frame (10).

2. The spectacle frame (10) of Claim 1, wherein
one of the first member and the second member is a front (12), and
the other of the first member and the second member is a temple (13a; 13b; 31).

3. The spectacle frame (10) of Claim 1, wherein
the first member and the second member are parts (31; 32; 33) of a temple (13a; 13b).

4. The spectacle frame (10) of Claim 3, wherein
one of the first member and the second member is a distal end part (33) of a temple (13a; 13b), and
the distal end part (33) is folded upward.

5. The spectacle frame (10) of anyone of Claims 1 to 4, wherein
the device fitting part (92) has:
two opposite device fitting end faces (925, 926);
a device fitting surface (924), provided between the device fitting end faces (925, 926); and
a device fitting groove (97), provided in the device fitting surface (924), penetrating between the device fitting end faces (925, 926), and having varying widths depending on locations along a depth direction, a first of the widths at a first depth being larger than a second of the widths at a second depth shallower than the first depth,
the first member (31) further has a body (36) extending generally along a first direction,
the frame fitting part has an extending part (38a; 38b; 38c; 38d),
the extending part (38a; 38b; 38c; 38d) extends from the body (36) along the first direction, and has generally the same length as the device fitting part (92), and a cross section to generally match the device fitting groove (97), so as to fit to the device fitting groove (97).

6. A device mountable spectacle frame system comprising:
the spectacle frame (10) of anyone of Claims 1 to 5; and
the device fitting part (92) fixed to the device (90).
